(19) Europäisches Patentamt
European Patent Office
Office européen des brevets

(11) **EP 3 561 772 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(21) Anmeldenummer: **18211356.3**

(22) Anmeldetag: **10.12.2018**

(51) Int Cl.:
*G06T 7/73* *(2017.01)*     *G06T 7/80* *(2017.01)*

(54) **VERFAHREN ZUR KALIBRIERUNG EINER ZEILENBILDAUFNAHMEEINHEIT**

METHOD FOR CALIBRATING AN LINESCANNING IMAGE RECORDING UNIT

PROCÉDÉ D'ÉTALONNAGE D'UNE UNITÉ D'ENREGISTREMENT D'IMAGES À BALAYAGE LINÉAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2018 AT 500552018**

(43) Veröffentlichungstag der Anmeldung:
**30.10.2019 Patentblatt 2019/44**

(73) Patentinhaber: **AIT Austrian Institute of Technology GmbH**
**1210 Wien (AT)**

(72) Erfinder:
• **BLASCHITZ, Bernhard**
  **1220 Wien (AT)**
• **STOLC, Svorad**
  **831 01 Bratislava (SK)**

(74) Vertreter: **Wildhack & Jellinek Patentanwälte OG**
**Landstraßer Hauptstraße 50**
**1030 Wien (AT)**

(56) Entgegenhaltungen:
EP-A1- 3 062 290    EP-A1- 3 128 483
EP-A2- 2 833 323    DE-B3-102007 009 664

• STOLC SVORAD ET AL: "Depth and all-in-focus imaging by a multi-line-scan light-field camera", JOURNAL OF ELECTRONIC IMAGING, S P I E - INTERNATIONAL SOCIETY FOR OPTICAL ENGINEERING, US, Bd. 23, Nr. 5, 1. September 2014 (2014-09-01), Seite 53020, XP060047706, ISSN: 1017-9909, DOI: 10.1117/1.JEI.23.5.053020 [gefunden am 2014-10-15]
• HABIB AYMAN ET AL: "Boresight Calibration of GNSS/INS-Assisted Push-Broom Hyperspectral Scanners on UAV Platforms", IEEE JOURNAL OF SELECTED TOPICS IN APPLIED EARTH OBSERVATIONS AND REMOTE SENSING, IEEE, USA, Bd. 11, Nr. 5, 1. Mai 2018 (2018-05-01), Seiten 1734-1749, XP011682538, ISSN: 1939-1404, DOI: 10.1109/JSTARS.2018.2813263 [gefunden am 2018-04-27]
• Doris Antensteiner ET AL: "High-Precision 3D Sensing with Hybrid Light Field & Photometric Stereo Approach in Multi-Line Scan Framework", Electronic Imaging, vol. 2017, no. 9, 29 January 2017 (2017-01-29), pages 52-60, XP055641605, ISSN: 2470-1173, DOI: 10.2352/ISSN.2470-1173.2017.9.IRIACV-268

**Beschreibung**

Die Erfindung betrifft ein Verfahren zur Kalibrierung einer Bildaufnahmeeinheit gemäß dem Oberbegriff des Patentanspruchs 1 und ein Verfahren zur Aufnahme von Bildern gemäß Patentanspruch 3.

Aus dem Stand der Technik sind einerseits Verfahren zur geometrischen Kalibrierung von Flächenkameras, dh zur Bestimmung intrinsischer Kameraparameter wie beispielsweise der Brennweite oder der Position des Hauptpunkts und extrinsischer Kameraparameter wie beispielsweise der Translation und Rotation eines Referenzgegenstands im Bezug auf die Bildaufnahmeeinheit bekannt, die keinen Zusammenhang zu einer Transporteinheit herstellen und andererseits Verfahren zur geometrischen Kalibrierung von Bildaufnahmeeinheiten, die über eine Anzahl von Sensorzeilen verfügen und ebenfalls intrinsische und extrinsische Kameraparameter berechnen, aber annehmen, dass der Transport entlang einer Geraden erfolgt, die parallel zur Sensorebene und orthogonal zu den ausgelesenen Zeilen ist.

Beispielsweise offenbaren Doris Antensteiner et al.: "High-Precision 3D Sensing with Hybrid Light Field & Photometrie Stereo Approach in Multi-Line Scan Framework", Electronic Imaging, Bd. 2017, Nr. 9, 29., Seiten 52-60, XP055641605, ISSN: 2470-1173, DOI: 10.2352/ ISSN.2470-1173.2017.9.IRIACV-268, ein Verfahren zur simultanen Erfassung von Lichtfeld- und photometrischen Stereodaten für die 3D-Tiefenrekonstruktion von Gegenständen im Zusammenhang mit Qualitätsprüfung in der Industrie. Dazu wird eine Bildaufnahmeeinheit mit Sensorzeilen, die hintereinander und parallel zueinander ausgerichtet sind, verwendet, wobei der Transport eines aufzunehmenden Gegenstands normal zur Zeilenrichtung der Bildaufnahmeeinheit erfolgt. Dabei wird davon ausgegangen, dass die perspektivische Verzerrung und die Linsenverzerrung vernachlässigbar sind.

Weiters sind keine einfach anwendbaren Methoden bekannt, mit denen eine Rektifizierung von Aufnahmen, die mit einer Bildaufnahmeeinheit mit einer Anzahl von Sensorzeilen, allenfalls getrennten oder nicht unmittelbar benachbarten Sensorzeilen eines Flächensensors, erstellt wurden, durchführbar ist, sodass die Aufnahmen für eine 3D-Rekonstruktion des Gegenstands herangezogen werden können.

Aufgabe der Erfindung ist es daher, diesbezüglich Abhilfe zu schaffen und ein Verfahren zur Kalibrierung einer Bildaufnahmeeinheit zur Verfügung zu stellen, mit dem auf einfache Weise sowie rasch und zuverlässig bei der Kalibrierung berücksichtigt werden kann, dass die Zeilenausrichtung der Bildaufnahmeeinheit und die Transportrichtung eines aufzunehmenden Gegenstands einen Winkel einschließen und derart rektifizierte Aufnahmen des Gegenstands zur Verfügung gestellt werden.

Die Erfindung löst diese Aufgabe mit den kennzeichnenden Merkmalen des Patentanspruchs 1. Bei einem Verfahren zur Kalibrierung einer Bildaufnahmeeinheit, wobei die Bildaufnahmeeinheit über eine Anzahl von Sensorzeilen mit einer Zeilenausrichtung in einem vom rechten Winkel abweichenden Winkel zur Transportrichtung des Referenzgegenstands verfügt, die in Transportrichtung hintereinander, insbesondere parallel zueinander ausgerichtet, angeordnet sind, insbesondere Zeilen eines Flächensensors bilden, wobei

a) ein Referenzgegenstand mehrfach jeweils mit unterschiedlicher Ausrichtung, insbesondere mit einer Transporteinheit, entlang einer Transportrichtung durch den Aufnahmebereich einer Bildaufnahmeeinheit bewegt wird, und von der Bildaufnahmeeinheit für jede der Ausrichtungen des Referenzgegenstands jeweils Referenzaufnahmen erstellt werden, und

b) aus diesen Referenzaufnahmen die Brennweite, die Position des Hauptpunktes der Bildaufnahmeeinheit und die Translation und Rotation des Referenzgegenstands in Bezug auf die Bildaufnahmeeinheit ermittelt werden,

c) ein Referenzgegenstand entlang der Transportrichtung durch den Aufnahmebereich einer Bildaufnahmeeinheit bewegt und Referenzaufnahmen erstellt werden, oder eine vorgegebene Anzahl der in Schritt a) erstellten Referenzaufnahmen herangezogen wird, die im Rahmen der Bewegung entlang der Transportrichtung durch den Aufnahmebereich einer Bildaufnahmeeinheit erstellt wurden,

wobei Bildpunkte aus unterschiedlichen Sensorzeilen in den zeitlich aufeinanderfolgend erstellten Referenzaufnahmen detektiert und einander zugeordnet werden, die Abbilder desselben Gegenstandspunkts des Referenzgegenstands enthalten,

d) eine statistische Schätzung eines Bewegungsfelds basierend auf der Zuordnung der einzelnen zeitlich aufeinanderfolgend aufgenommenen Bildpunkte erstellt wird, und daraus eine globale Transportrichtung ermittelt wird, die die Bewegungsrichtung des Referenzgegenstands gegenüber der Bildaufnahmeeinheit angibt,

ist erfindungsgemäß vorgesehen, dass

e) eine Sensorebene aufgrund der ermittelten Kameraparameter bestimmt wird, wobei

- die Sensorebene durch den Hauptpunkt verläuft,
- die Sensorebene normal auf den den Hauptpunkt und das Kamerazentrum verbindenden Hauptsehstrahl ausgerichtet ist,
- und der Abstand zwischen dem Kamerazentrum der Bildaufnahmeeinheit und dem Hauptpunkt der Brennweite entspricht,

f) eine neue Bildebene derart ermittelt und festgelegt wird, dass eine der Koordinatenrichtungen der neuen Bildebene parallel zur Transportrichtung ist,

- derart,

  - dass die Bildebene mit einem minimalen Winkel zur Sensorebene gedreht ist, und/oder

  - dass der Abstand zwischen dem Kamerazentrum und dem Hauptpunkt der Bildebene, der Brennweite entspricht, und

g) eine Bildtransformation, insbesondere eine perspektivische Abbildungsvorschrift, der Sensorebene in die Bildebene des Schritts f) ermittelt wird, die für jeden auf der Sensorebene liegenden Punkt den Schnittpunkt einer durch diesen Punkt und das Kamerazentrum verlaufenden Geraden mit der Bildebene angibt, und
h) für eine Anzahl von ausgewählten Sensorzeilen jeweils eine Zeilentransformation erstellt wird, die angibt, wie für jede ursprüngliche Bildpunktposition in der Sensorebene, die einer jeweils betrachteten Zeilenaufnahme einer Sensorzeile der Bildaufnahmeeinheit zugeordnet ist, eine rektifizierte Bildpunktposition in der Sensorebene ermittelt wird.

Zur Erstellung einer besonders rasch und zuverlässig durchzuführenden Zeilentransformation kann bei einem erfindungsgemäßen Verfahren zur Kalibrierung einer Bildaufnahmeeinheit vorgesehen sein, dass in Schritt h) für jede ursprüngliche Bildpunktposition in der Sensorebene, die einer jeweils betrachteten Zeilenaufnahme einer Sensorzeile der Bildaufnahmeeinheit zugeordnet ist, eine rektifizierte Bildpunktposition in der Sensorebene ermittelt wird, indem

- die Bildtransformation auf die ursprünglichen Bildpunktpositionen in der Sensorebene angewandt wird, sodass sie auf transformierte Bildpunktpositionen in der Bildebene abgebildet werden,
- die transformierten Bildpunktpositionen in der Bildebene einer Neupositionierung in Form einer Verschiebung unterzogen werden, wobei die transformierten Bildpunktpositionen in der Bildebene derart auf bereinigte Bildpunktpositionen verschoben werden, dass einander zugeordnete bereinigte Bildpunktpositionen verschiedener Sensorzeilen eine gleiche Koordinate aufweisen und
- ausgehend von den bereinigten Bildpunktpositionen in der Bildebene unter Anwendung der Inversen der Bildtransformation rektifizierte Bildpunktpositionen in der Sensorebene berechnet werden.

Bei einem erfindungsgemäßen Verfahren zur Aufnahme von Bildern ist zur einfachen Erstellung eines rektifizierten Bildstapels bzw. zur Erstellung von rektifizierten Zeilenaufnahmen, bei denen die Epipolarbedingung erfüllt ist, vorgesehen, dass anschließend an die erfindungsgemäße Kalibrierung der Bildaufnahmeeinheit, ein Gegenstand mit der Transporteinheit entlang der Transportrichtung durch den Aufnahmebereich der Bildaufnahmeeinheit bewegt wird und mit einer ausgewählten Anzahl der Sensorzeilen während der Bewegung des Gegenstands jeweils Zeilenaufnahmen erstellt werden und die einzelnen Zeilenaufnahmen separat der der jeweiligen Sensorzeile zugeordneten Zeilentransformation unterzogen werden.
Zur besonders zuverlässigen Ermittlung von Helligkeitswerten einer rektifizierten Zeilenaufnahme kann bei einem erfindungsgemäßen Verfahren zur Aufnahme von Bildern vorgesehen sein, dass im Rahmen der Zeilentransformation zur Ermittlung eines Helligkeitswerts für eine jeweils betrachtete, einer Sensorzeile zugeordnete, rektifizierte Bildpunktposition in der Sensorebene die Helligkeitswerte ihrer in der Sensorebene jeweils benachbarten ursprünglichen Bildpunktpositionen interpoliert werden, insbesondere linear in demjenigen Abstandsverhältnis kombiniert werden, das eine jeweils betrachtete rektifizierte Bildpunktposition zu ihren benachbarten ursprünglichen Bildpunktpositionen, die derselben Sensorzeile zugeordnet sind, aufweist.
Um sicherzustellen, dass die Bildaufnahmeeinheit einen Gegenstand möglichst aus allen Richtungen entlang der Sensorzeilen gleichmäßig oft abtastet, kann bei einem Verfahren zur Aufnahme von Bildern vorgesehen sein, dass rektifizierte Zeilenaufnahmen erstellt werden, indem für die erstellten Zeilenaufnahmen jeweils eine die ermittelten Helligkeitswerte interpolierende Funktion erstellt wird und diese Funktion an einer Anzahl von Positionen ausgewertet wird, deren Abbilder unter der Bildtransformation äquidistant oder nach einer anderen Vorgabe in der Bildebene verteilt sind, und die Ergebnisse dieser Auswertung der rektifizierten Zeilenaufnahme zugeordnet werden.
Zur besonders einfachen Ermittlung von Bildpunktpositionen rektifizierter Zeilenaufnahmen kann bei einem erfindungsgemäßen Verfahren zur Aufnahme von Bildern vorgesehen sein, dass die interpolierende Funktion an einer Anzahl von rektifizierten Bildpunktpositionen in der Sensorebene ausgewertet wird, wobei für die Ermittlung der rektifizierten Bildpunktpositionen in der Sensorebene bereinigte Bildpunktpositionen mittels einer Neupositionierung von transformierten Bildpunktpositionen in der Bildebene derart ermittelt werden, dass

- einander zugeordnete bereinigte Bildpunktpositionen verschiedener Sensorzeilen dieselbe Koordinate aufweisen und

- bereinigte Bildpunktpositionen äquidistant zu ihren jeweils benachbarten bereinigten Bildpunktpositionen, die derselben Sensorzeile zugeordnet sind, angeordnet sind, oder nach einer anderen Vorgabe in der Bildebene verteilt sind, und die rektifizierten Bildpunktpositionen in der Sensorebene unter Anwendung der Inversen der Bildtransformation auf die bereinigten Bildpunktpositionen ermittelt und der rektifizierten Zeilenaufnahme zugeordnet werden.

In den Pixelwerten einer Bildaufnahmeeinheit mit Sensorzeilen metrische Einheiten zuordnen zu können, kann bei einem erfindungsgemäßen Verfahren vorgesehen sein, dass ein Referenzgegenstand mit bekannten in metrischen Einheiten vorgegebenen Abmessungen verwendet wird, und den von den jeweiligen Pixeln jeder der Sensorzeilen stammenden Helligkeitswerten metrische Einheiten zugeordnet werden.

Weitere Vorteile und Ausgestaltungen der Erfindung ergeben sich aus der Beschreibung und den beiliegenden Zeichnungen.

Besonders vorteilhafte, aber nicht einschränkend zu verstehende Ausführungsbeispiele der Erfindung werden im Folgenden anhand der beiliegenden Zeichnungen schematisch dargestellt und unter Bezugnahme auf die Zeichnungen beispielhaft beschrieben.

Im Folgenden zeigen:

Fig. 1 schematisch den Aufbau einer Anordnung zur Durchführung eines erfindungsgemäßen Verfahrens,

Fig. 2 ein Beispiel eines Bildstapels als Resultat einer Aufnahme eines Gegenstandspunkts bei nicht-paralleler Ausrichtung der Transportrichtung zur Bildaufnahmeeinheit,

Fig. 3 eine schematische Darstellung der Abbildung eines Gegenstands auf die Sensorebene,

Fig 3a zeigt die ursprüngliche Sensorebene I und Fig 3b die neue Sensorebene I'.

Fig. 4 eine Projektion von Fig. 3 entlang der u-Koordinate,

Fig. 5a mit drei Sensorzeilen aufgenommene Bildpunkten in die Sensorebene

Fig. 5b das Ergebnis der Anwendung einer Bildtransformation H auf die Bildpunkte in der Sensorebene zu deren Überführung in die Bildebene,

Fig. 5c das Ergebnis der Anwendung einer Zeilentransformation R auf die Bildpunkte in der Bildebene und

Fig. 5d das Ergebnis der Anwendung der inversen Bildtransformation $H^{-1}$ auf die Bildpunkte in der Bildebene zu deren Überführung in die Sensorebene.

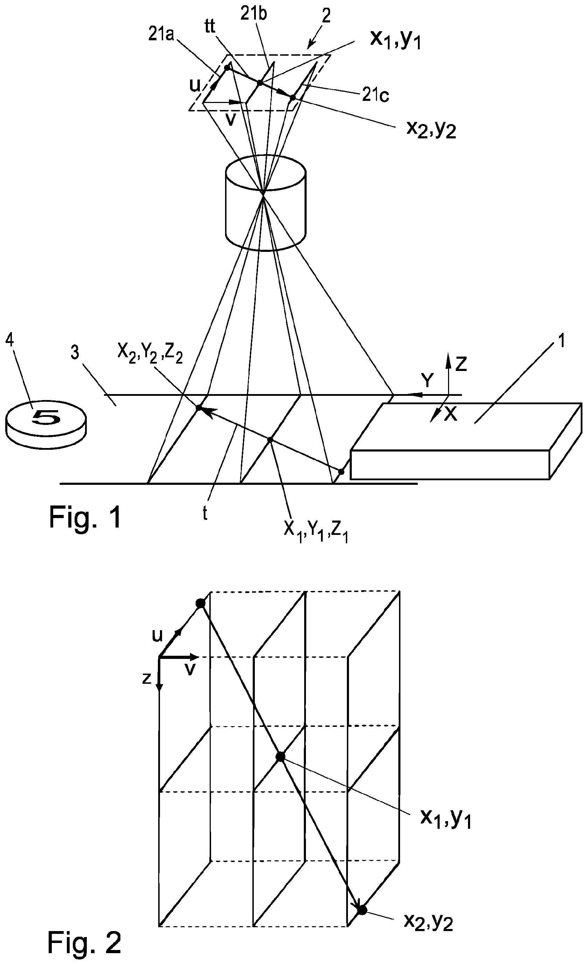

Der in Fig. 1 dargestellte Aufbau zur Durchführung eines erfindungsgemäßen Verfahrens zur Kalibrierung einer Bildaufnahmeeinheit 2 bzw. zur Aufnahme von Bildern umfasst eine Bildaufnahmeeinheit 2, die über eine Anzahl von Sensorzeilen 21a, 21b, 21c verfügt. Die Sensorzeilen 21a, 21b, 21c der Bildaufnahmeeinheit 2 können auch einzelne ausgewählte Zeilen eines Flächensensors bilden. Jedes der Sensorpixel der Sensorzeilen weist eine u-Koordinate in Zeilenrichtung u auf. Die Sensorpixel, die derselben Sensorzeile zugehören, weisen - bezogen auf den Flächensensor - dieselbe v-Koordinate auf.- Im gezeigten Ausführungsbeispiel umfasst die Bildaufnahmeeinheit 2 drei Sensorzeilen 21a, 21b, 21c. Die Sensorzeilen 21a, 21b, 21c sind dabei zur Aufnahme eines Referenzgegenstands 1 auf einen Bereich des Referenzgegenstands 1 gerichtet. Der Referenzgegenstand 1 wird dabei mit einer Transporteinheit 3 durch den Aufnahmebereich der Bildaufnahmeeinheit 2 transportiert.

Ein derartiger Aufbau ist auch dazu geeignet, Aufnahmen eines Gegenstands 4, der vom Referenzgegenstand 1 abweicht, mittels der Bildaufnahmeeinheit 2 zu erstellen, während der Gegenstand 4 durch den Aufnahmebereich der Bildaufnahmeeinheit 2 transportiert wird. Bei einem derartigen Gegenstand 4 kann es sich beispielsweise um eine Münze handeln, wie sie in Fig. 1 schematisch dargestellt ist.

Die Zeilenausrichtung der Sensorzeilen 21a, 21b, 21c ist in einem Winkel oder normal zur Transportrichtung t angeordnet und die Sensorzeilen 21a, 21b, 21c sind in Transportrichtung t hintereinander insbesondere parallel zueinander angeordnet. Vorzugsweise sind die Sensorzeilen in Zeilenrichtung nicht gegeneinander verschoben und/oder so ausgerichtet dass die jeweils ersten Pixel der Sensorzeilen 21a, 21b, 21c auf einer Geraden liegen, die näherungsweise in Transportrichtung t ausgerichtet ist. Allenfalls kann diese Gerade auch in einem vorgegebenen Winkel zur Transportrichtung stehen.

Bei dem in Fig. 1 gezeigten Ausführungsbeispiel der Erfindung wird ein Referenzgegenstand 1 mittels der Transporteinheit 3 durch den Aufnahmebereich der Bildaufnahmeeinheit 2 transportiert. Jede der Sensorzeilen 21a, 21b, 21c erstellt während des Transports entlang der Transportrichtung t Aufnahmen des Referenzgegenstands 1 unter verschiedenen Aufnahmewinkeln. Somit stehen, wenn der Referenzgegenstand 1 den Aufnahmebereich der Bildaufnahmeeinheit 2 verlassen hat, für die einzelnen Gegenstandspunkte des Referenzgegenstands jeweils drei Aufnahmen zur Verfügung, die den jeweiligen Gegenstandspunkt aufgenommen von jeder der Sensorzeile 21a, 21b, 21c jeweils unter einem anderen Blickwinkel zeigen.

Für die Erstellung von Aufnahmen des Referenzgegenstands 1 kann dieser auch manuell im Aufnahmebereich der Bildaufnahmeeinheit 2 positioniert und bewegt werden. Auch kann durch eine andere Vorrichtung die Position und Lage des Referenzgegenstandes 1 in Bezug auf die Bildaufnahmeeinheit 2 zufällig gewählt werden und gegebenenfalls durch den Aufnahmebereich der Bildaufnahmeeinheit 2 bewegt werden.

Bei dem in **Fig. 1** gezeigten Ausführungsbeispiel ist die Ausrichtung der Sensorzeilen 21a, 21b, 21c der Bildaufnahmeeinheit 2 jedoch nicht normal, sondern in einem vom rechten Winkel abweichenden Winkel zur Transportrichtung t ausgerichtet. Daher sind die einzelnen Abbilder desselben Gegenstandspunkts in den einzelnen im Zuge der Bewegung ermittelten Aufnahmen von Sensorpixeln der Sensorzeilen abgebildet, die sich an unterschiedlichen Positionen in Sensorrichtung befinden bzw bezogen auf den Flächensensor eine unterschiedliche u-Koordinate aufweisen. Die Abbilder eines Gegenstandspunkts finden sich daher - anders als erwartet - nicht in Sensorpixeln mit jeweils derselben u-Koordinaten wieder.

**Fig. 2** zeigt eine schematische Darstellung des Bildstapels, der von der Bildaufnahmeeinheit 2 aufgenommen wird. Ein horizontaler Schnitt durch diesen Bildstapel ist eine Flächenaufnahme des Sensors zu einem Zeitpunkt, die zeitliche Komponente ist die z-Richtung. Der linke vertikale Schnitt in uz-Richtung entspricht der Aufnahme einer Sensorzeile 21a über einen gewissen Zeitraum. Darin findet sich das Abbild eines Gegenstandspunkts des Referenzgegenstands 1 aufgenommen mit verschiedenen Sensorzeilen 21a, 21b, 21c jeweils an unterschiedlichen u-Positionen in den Aufnahmen der Sensorzeilen zu unterschiedlichen Zeiten, also unterschiedlichen z-Koordinaten. Diese einzelnen Abbilder liegen, wie in **Fig. 2** dargestellt, ganz allgemein auf Geraden. Sofern zusätzlich eine Linsenverzerrung vorliegt, können diese Abbilder auf allgemeinen Kurven liegen.

Die Distanz, die ein jeweiliges Pixel sich entlang der z-Richtung dieser Geraden bewegt, ist direkt proportional zum Abstand des dadurch abgebildeten Gegenstandspunkts von der Bildaufnahmeeinheit 2. Bei einer etwaigen dreidimensionalen Rekonstruktion des Referenzgegenstands 1 oder eines anderen Gegenstands 4 ausgehend von erstellten Aufnahmen kann dies berücksichtigt werden. Dabei kann auch eine Überführung von Pixelabständen in metrische Einheiten vorgenommen werden.

Bei bekannten Verfahren zur Kalibrierung einer Bildaufnahmeeinheit 2 mit einer Anzahl von Sensorzeilen 21a, 21b, 21c wird jedoch davon ausgegangen, dass der Transport des Referenzgegenstands 1 entlang einer Transportrichtung t erfolgt, die parallel zur Ebene der Bildaufnahmeeinheit 1 und normal zu den ausgelesenen Sensorzeilen 21a, 21b, 21c erfolgt.

Ist allerdings die Bildaufnahmeeinheit 2 bzw. deren Sensorzeilen 21a, 21b, 21c relativ zur Transportrichtung t in einem Winkel ausgerichtet, verlaufen die Trajektorien eines Punktes nicht parallel zur vz-Ebene dieses Bildstapels, d.h. die u-Koordinaten des Punktes variieren.

Um den in **Fig. 1** dargestellten Transport entlang einer zu den Sensorzeilen 21a, 21b, 21c beliebig orientierten Geraden zu berücksichtigen, wird bei einem erfindungsgemäßen Verfahren zunächst ein Referenzgegenstand 1 mehrfach jeweils mit unterschiedlicher Ausrichtung mit der Transporteinheit 3 entlang der Transportrichtung t durch den Aufnahmebereich der Bildaufnahmeeinheit 2 bewegt. Dabei werden für jede der Ausrichtungen von der Bildaufnahmeeinheit 2 jeweils Referenzaufnahmen des Referenzgegenstands 1 erstellt. Jede Referenzaufnahme des Referenzgegenstands 1 besteht dabei aus Reihen von Pixeln, wobei jede der Reihen von einer anderen Sensorzeile 21a, 21b, 21c erstellt wurde.

Für die Bestimmung der einzelnen Kameraparameter können vorteilhafterweise die Abbilder aller Sensorzeilen des gesamten Flächensensors verwendet werden, auch wenn im Rahmen der späteren Aufnahme nur einzelne ausgewählte Sensorzeilen 21a, 21b, 21c für die Bilderstellung herangezogen werden.

Beim Referenzgegenstand 1 handelt es sich dabei um einen ebenen Gegenstand, auf dem beispielsweise ein raster- oder punktförmiges Kalibriermuster aufgedruckt ist. Aus den derart erstellten Referenzaufnahmen des Referenzgegenstands 1 werden die Brennweite f, die Position des Hauptpunkts c und gegebenenfalls ein Verzerrungsvektor k der Bildaufnahmeeinheit 2, das heißt die intrinsische Kameraparameter der Bildaufnahmeeinheit 2 mit einem aus dem Stand der Technik bekannten Kalibrierverfahren für Flächensensoren ermittelt.

Weiters werden die Translation und die Rotation des Referenzgegenstands 1 in Bezug auf die Bildaufnahmeeinheit 2, das heißt die extrinsische Kameraparameter der Bildaufnahmeeinheit 2 ermittelt.

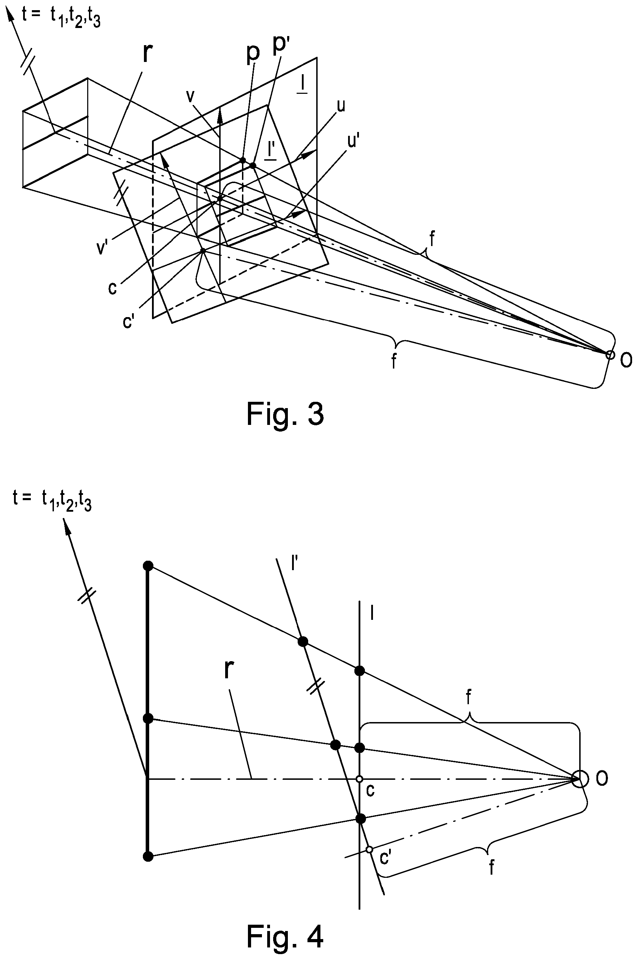

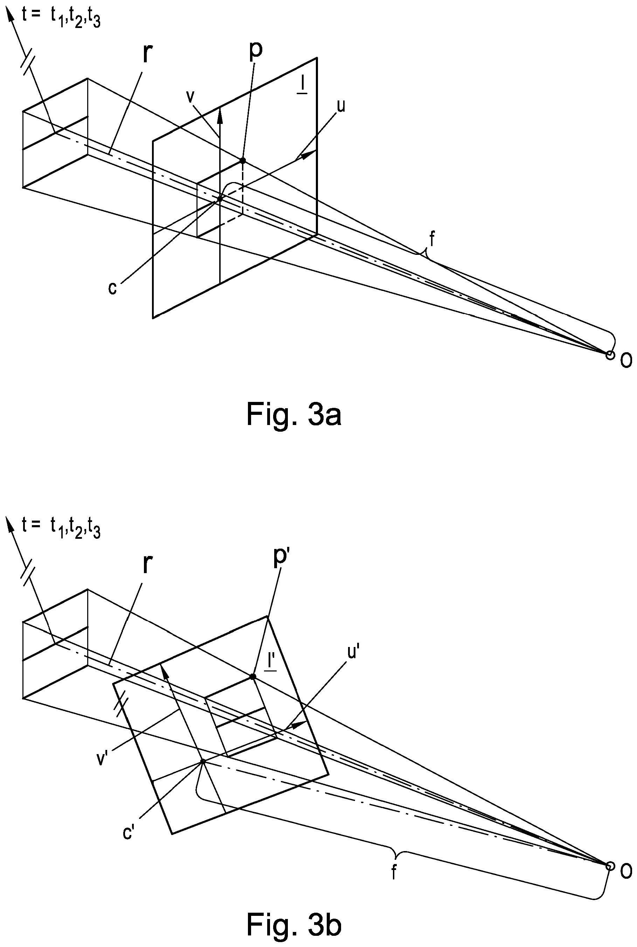

Dabei kann beispielsweise von einem Lochkameramodell ausgegangen werden, bei dem Weltpunkte, die sich beispielsweise auf dem Referenzgegenstand 1 befinden, mittels Zentralprojektion auf die aufgenommenen Bildpunkte in einer Sensorebene I der Bildaufnahmeeinheit 2 abgebildet werden, worin die Brennweite f, der Hauptpunkt c der Bildaufnahmeeinheit 2 einfließen, siehe **Fig. 3** bzw **Fig. 3a**. Solche Kalibrierverfahren sind grundsätzlich aus dem Stand der Technik bekannt und beispielsweise in Richard Hartley and Andrew Zisserman, Multiple View Geometry in Computer Vision, Cambridge University Press 2000 beschrieben.

Im Rahmen der Kalibrierung kann ein Referenzgegenstands 1 mit einem speziellen Kalibriermuster verwendet werden, um die Kameraparameter der Bildaufnahmeeinheit 2 zu bestimmen. Dazu wird der Referenzgegenstand 1 mittels der Transporteinheit 3 in eine erste Position gebracht und eine Referenzaufnahme mit der Bildaufnahmeeinheit 2 erstellt.

Ein Gegenstandspunkt auf dem Referenzgegenstand 1 ist somit durch zwei Koordinaten $(x_1, y_1)$ im zweidimensionalen Abbild des Referenzgegenstands 1, d.h. in der Referenzaufnahme, gekennzeichnet (**Fig. 2**). Wird dieser Verfahrensschritt für viele Punkte in bestimmten Lagen auf dem Referenzgegenstand durchgeführt, können daraus die intrinsischen Kameraparameter dargestellt in Form der Kameramatrix P und die extrinsischen Kameraparameter als Rotationsmatrix R und Positionsvektor T angegeben werden.

Verwendet man der Einfachheit halber ein linsenverzerrungsfreies Lochkameramodell und sind diese Kameraparameter sowie die einzelnen Bildkoordinaten $(x_1,y_1)$ des Gegenstandspunkts bekannt, kann die ursprüngliche Lage eines Gegenstandspunktes $X = (X_1,Y_1,Z_1)$ im Raum (**Fig. 1**) ermittelt werden, der durch die Bildaufnahmeeinheit 2 als Bildpunkt mit den Koordinaten $(x_1,y_1)$ im zweidimensionalen Abbild, das heißt zur Referenzaufnahme, abgebildet wurde, ermittelt werden als $(x_1,y_1) = P*([X_1,Y_1,Z_1]*R+T)$. Hauptpunkt c und Brennweite f sind dabei in der Kameramatrix P = [f 0 $c_1$; 0 f $c_2$; 0 0 1] enthalten.

Der Ursprung des Weltkoordinatensystems liegt dabei im Kamerazentrum O, wie dies in **Fig. 3** zu sehen ist. Eine Koordinatenachse des Weltkoordinatensystems fällt dabei mit dem Hauptsehstrahl r, der vom Kamerazentrum O zum Hauptpunkt c verläuft, zusammen, während die beiden anderen Koordinatenachsen mit dieser einen rechten Winkel einschließen und zueinander ebenfalls in einem rechten Winkel stehen.

Als nächster Schritt wird der Referenzgegenstand 1 entlang der Transportrichtung t durch den Aufnahmebereich der Bildaufnahmeeinheit 2 bewegt, wobei erneut Referenzaufnahmen erstellt werden, oder eine vorgegebene Anzahl der zuvor erstellten Referenzaufnahmen wird herangezogen. In den Referenzaufnahmen werden jeweils Bildpunkte aus unterschiedlichen Sensorzeilen 21a, 21b, 21c detektiert und einander zugeordnet, die Abbilder desselben Gegenstandspunkts des Referenzgegenstands 1 in den zeitlich aufeinanderfolgend erstellten Referenzaufnahmen enthalten.

Anschließend wird eine statistische Schätzung eines Bewegungsfelds basierend auf der Zuordnung der einzelnen zeitlich aufeinanderfolgend aufgenommenen Bildpunkte erstellt. Daraus wird eine globale Transportrichtung t ermittelt, die die Bewegungsrichtung eines Referenzgegenstands 1 gegenüber der Bildaufnahmeeinheit 2 bezogen auf das in **Fig. 3** dargestellte Koordinatensystem angibt. Ein solches Verfahren ist aus dem Stand der Technik grundsätzlich bekannt und beispielsweise in Štolc, S., Huber-Mörk, R., Holländer, B., & Soukup, D. (2014). Depth and all-in-focus images obtained by multi-line-scan lightfield approach. Proc. of SPIE-IS&T/Vol, 9024, 902407-1 angegeben.

Dazu werden zunächst eine erste Referenzaufnahme des Referenzgegenstands 1 und eine weitere Referenzaufnahme des Referenzgegenstand 1, die erstellt wurde, nachdem der Referenzgegenstand 1 beispielsweise mit der Transporteinheit 3 weiterbewegt wurde.

In der ersten Referenzaufnahme erscheint ein betrachteter Gegenstandspunkt an einer ersten Position als Bildpunkt mit den Koordinaten $(x_1,y_1)$. In der weiteren Referenzaufnahme erscheint der weiterbewegte Bildpunkt nun an einer zweiten Position mit den Koordinaten $(x_2,y_2)$, die unter Einbeziehung der ermittelten Kameraparameter analog zu $(X_1,Y_1,Z_1)$ als Gegenstandspunkt $(X_2,Y_2,Z_2)$ in Weltkoordinaten ermittelt werden kann. Die Transportrichtung t, entlang der der Referenzgegenstand 1 transportiert wurde, ist somit gegeben durch: $t = (X_2,Y_2,Z_2) - (X_1,Y_1,Z_1)$.

Die horizontalen Schnitte durch den Bildstapel in **Fig. 2** sind die erstellten Referenzaufnahmen, die Verschiebung des Abbilds des betrachteten Gegenstandspunkts ist bei den erstellten Referenzaufnahmen im Bildstapel von der Position $(x_1,y_1)$ zur Position $(x_2,y_2)$ nachzuverfolgen, den man auch in der Bildaufnahmeeinheit 2 in **Fig. 1** sieht. Die derart angegebene Transportrichtung tt entspricht der dreidimensionalen Transportrichtung t in Weltkoordinaten übertragen auf die Referenzaufnahmen, wobei tt = P*t ist und somit als zweidimensionaler Vektor angegeben ist.

Im Folgenden werden zur Bestimmung der Transportrichtung t eine große Anzahl von Referenzaufnahmen erstellt, in denen möglichst viele Gegenstandspunkte des Referenzgegenstands 1 in ihrer Position in den unterschiedlichen Referenzaufnahmen nachvollzogen werden, sodass sich eventuell auftretenden Fehler statistisch aufheben.

Anschließend wird eine Sensorebene I aufgrund der ermittelten Kameraparameter bestimmt. Dabei wird die Sensorebene I derart festgelegt, dass sie durch den Hauptpunkt c verläuft, normal auf den, den Hauptpunkt c und das Kamerazentrum O verbindenden, Hauptsehstrahl r ausgerichtet ist und der Abstand zwischen dem Kamerazentrum O, der Bildaufnahmeeinheit 2 und dem Hauptpunkt c der Brennweite f entspricht.

Die Sensorebene I ist damit festgelegt durch ein Koordinatensystem mit dem Hauptpunkt c als Zentrum und wird von den Vektoren u = (1,0,0) und v = (0,1,0) aufgespannt. Der Hauptpunkt c = (0,0,f) bzw. das Zentrum der Sensorebene I ist somit um eine Distanz, die der Brennweite f entspricht, vom Kamerazentrum O entfernt, was soweit dem Stand der Technik entspricht.

Zur effizienten Berücksichtigung des Umstands, dass die Zeilenausrichtung der Sensorzeilen 21a, 21b, 21c der Bildaufnahmeeinheit 2 in einem Winkel zur Transportrichtung t orientiert ist, wird als nächster Schritt eine neue Bildebene I' ermittelt und festgelegt.

Eine der Koordinatenrichtungen v' der neuen Bildebene I' ist dabei parallel zur zuvor ermittelten Transportrichtung t. Die normierte Transportrichtung ist dabei durch einzelne Komponenten $(t_1, t_2, t_3)$ festgelegt, die die Ausrichtung der Transportrichtung gegenüber dem Weltkoordinatensystem angeben. Die neue Bildebene I' ist insbesondere derart festgelegt, dass die Bildebene I' mit einem minimalen Winkel zur Sensorebene I gedreht ist, und zwar um das Kamerazentrum O. Das heißt, dass der Winkel zwischen den Normalvektoren auf die Sensorebene I und die Bildebene I' minimal ist. Die beiden weiteren Koordinatenachsen u', w' schließen miteinander und mit v' jeweils einen rechten Winkel ein. Die einzelnen Koordinatenrichtungen u', v', w' können in Bezug auf das WeltKoordinatensystem kann beispielsweise wie folgt festgelegt werden:

$$\mathbf{u}' = 1/\sqrt{t_1^2 + t_2^2} \cdot (t_2, -t_1, 0)$$

$$\mathbf{v}' = (t_1, t_2, t_3)$$

$$\mathbf{w}' = 1/\sqrt{t_1^2 + t_2^2} \cdot (-t_1 t_3, -t_2 t_3, t_1^2 + t_2^2),$$

Dabei steht der Vektor w' normal zur Bildebene I', die Vektoren u' und v' liegen in der Bildebene I' und alle drei bilden ein Orthonormalsystem.

Insbesondere ist die Bildebene I' gleichbedeutend derart festgelegt, dass der Abstand zwischen dem Kamerazentrum O und dem Hauptpunkt c' = f*w' der Bildebene I' der Brennweite f entspricht. Dies gewährleistet, dass die Skalierung bei der Abbildung von der Sensorebene in die Bildebene I' gleich bleibt und die perspektivische Verzerrung zwischen den in der Sensorebene I abgebildeten Bildpunkten und Bildpunkten in der neuen Bildebene I' möglichst gering ist. Ein weiterer Vorteil dieser Wahl ist, dass in dieser neuen Bildebene der Verschub achsenparallel ist.

Anschließend wird eine Bildtransformation H der Sensorebene I in die Bildebene I', die insbesondere eine perspektivische Abbildungsvorschrift ist, ermittelt, die für jeden auf der Sensorebene I liegenden Punkt p den Schnittpunkt p' einer durch diesen Punkt p und das Kamerazentrum O verlaufenden Geraden mit der Bildebene I' angibt, siehe **Fig 3** bzw. **Fig 3b.**

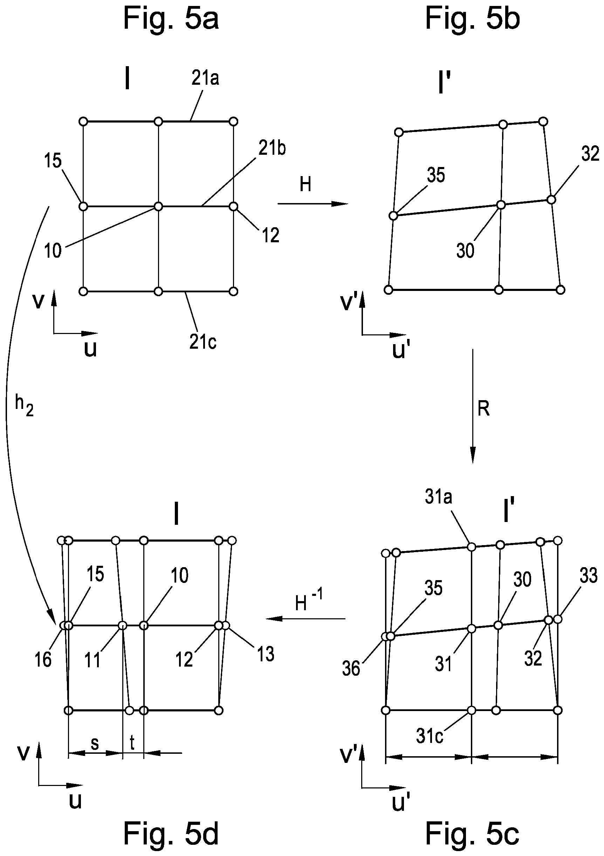

Beim gezeigten Ausführungsbeispiel wird dabei jeder Bildpunkt mit homogenen Koordinaten $(x'_i, y'_j, 1)$ in der Sensorebene I, beispielsweise die beiden der Sensorzeile 21b zugeordneten Bildpunkte 10, 12, 15 in **Fig. 5a,** auf die Bildebene I' durch das Kamerazentrum O mittels der perspektivischen Bildtransformation H auf die neue Bildebene I' projiziert. Der Index i beschreibt dabei die Pixelpositionen entlang der jeweiligen Sensorzeile 21a, 21b, 21c und der Index j legt die jeweilige Sensorzeile 21a, 21b, 21c fest, insbesondere durch Angabe eines Zeileindex.

Im gezeigten Ausführungsbeispiel überführt die Bildtransformation H die Bildpunkte 10, 12 15 der Sensorebene I in **Fig. 5a** in die Bildpunkte 30, 32, 35 der Bildebene I' in **Fig. 5b. Fig. 5b** zeigt die Anwendung der Bildtransformation H auf mehrere Zeilenaufnahmen von Sensorzeilen 21a, 21b, 21c. Die einzelnen Pixelpositionen einer jeweiligen Zeilenaufnahme in der Sensorebene I werden durch die Anwendung der Bildtransformation H perspektivisch verzerrt auf die Bildebene I' abgebildet.

Bei der Bildtransformation H handelt es sich im Ausführungsbeispiel um eine Homographie. Dies ist eine bijektive Abbildung zwischen projektiven Ebenen bzw. Räumen, die alle Geraden wieder auf Geraden abbildet. Dabei werden Vierecke wie beispielsweise Quadrate auf allgemeine Vierecke abgebildet. Im gezeigten Ausführungsbeispiel ist die Homographie gegeben durch:

$$\mathbf{H} = \begin{pmatrix} u'_1 & v'_1 & w'_1/f \\ u'_2 & v'_2 & w'_2/f \\ f u'_3 & f v'_3 & w'_3 \end{pmatrix}$$

$$= \begin{pmatrix} 1 & & \\ & 1 & \\ & & f \end{pmatrix} \cdot \mathbf{U} \cdot \begin{pmatrix} 1 & & \\ & 1 & \\ & & 1/f \end{pmatrix},$$

mit

$$\mathbf{U} = \begin{pmatrix} u'_1 & v'_1 & w'_1 \\ u'_2 & v'_2 & w'_2 \\ u'_3 & v'_3 & w'_3 \end{pmatrix} \quad \text{und} \quad \mathbf{U}^{-1} = \mathbf{U}^T$$

Daher wird jeder Punkt mit inhomogenen Koordinaten (x',y') in der Sensorebene I abgebildet auf einen transformierten Punkt (x'',y'') = f/(x'w$_1$' +y'w$_2$' +f w$_3$') * (x'u$_1$' + y'u$_2$' + f u$_3$',x'v$_1$' + y'v$_2$' + f v$_3$') in der Bildebene I', was in **Fig. 5b** dargestellt ist.

Anschließend soll ausgehend von der Abbildungsmatrix für die ausgewählten Zeilen der Zeilensensoren jeweils eine Zeilentransformation h$_1$, ..., h$_3$ erstellt werden, die angibt, wie eine vorgegebene Zeilenaufnahme eine Sensorzeile 21a, 21b, 21c der Bildaufnahmeeinheit 2 auf die Bildebene I abgebildet wird. Unter Verwendung einer solchen Zeilentransformation kann eine ermittelte Zeilenaufnahme in eine rektifizierte Zeilenaufnahme übergeführt werden.

Die Zeilentransformation h$_1$, ..., h$_3$ soll dabei jeweils angeben, wie für jede jeweils einer Sensorzeile 21a, 21b, 21c der Bildaufnahmeeinheit 2 zugeordnete ursprüngliche Bildpunktposition 10, 12, 15 in der Sensorebene I einer vorgegebenen Zeilenaufnahme rektifizierte Bildpunktpositionen 11, 13, 16 in der Sensorebene I errechnet werden.

Zunächst wird die Bildtransformation H auf die ursprünglichen Bildpunktpositionen 10, 12, 15 in der Sensorebene I (**Fig. 5a**) angewandt, sodass sie als transformierte Bildpunktpositionen 30, 32, 35 in der Bildebene I' (**Fig. 5b**) zu liegen kommen, wobei die u'-Koordinaten zugeordneter Bildpunkte unterschiedlicher Sensorzeilen nicht notwendigerweise gleich sind. Um eine gleich u'-Koordinate der Bildpunktpositionen zu erreichen, werden die transformierten Bildpunktpositionen 30 in der Bildebene I' mittels einer Neupositionierung R auf bereinigte Bildpunktpositionen 31 (**Fig. 5c**) in der Bildebene I' verschoben, deren u'-Koordinate gleich ist zu der u'-Koordinate zugeordneter Punkte in Sensorzeilen 31a, 31c.

Weiters wird festgestellt, dass nach Anwendung der Bildtransformation H auf die ursprünglichen Bildpunktpositionen 10, 12, 15 in der Sensorebene I (**Fig. 5a**) die transformierten Bildpunktpositionen 30, 32, 35 in der Bildebene I' (**Fig. 5b**) so zu liegen kommen, dass die Abstände zwischen den transformierten Bildpunktpositionen 30, 32, 35 in der Bildebene I', die von einer jeweiligen Sensorzeile 21a, 21b, 21c herrühren, nicht notwendigerweise gleichverteilt sind.

Um zusätzlich zu gleichen u'-Koordinaten auch eine Gleichverteilung Abstände der Bildpunktpositionen in u'-Richtung zu erreichen, werden die transformierten Bildpunktpositionen 30, 32, 35 in der Bildebene I' mittels einer Neupositionierung R auf bereinigte Bildpunktpositionen 31, 33, 36 (**Fig. 5c**) in der Bildebene I' verschoben, deren Abstände entlang der Sensorzeile zueinander gleichverteilt sind. Einander zugeordnete bereinigte Bildpunktpositionen 31a, 31, 31c unterschiedlicher Sensorzeilen 21a, 21b, 21c haben dieselbe u'-Koordinate. Die v'-Koordinate der derart erhaltenen bereinigten Punkte (x''',y'''), in **Fig. 5c** etwa 31, 33, 36 variiert. **Fig. 5c** zeigt die Anwendung der Neupositionierung R auf mehrere Zeilenaufnahmen von Sensorzeilen 21a, 21b, 21c.

Anschließend werden unter Anwendung der Inversen H$^{-1}$ der Bildtransformation H für die bereinigten Bildpunktpositionen 31, 33, 36 in der Bildebene I' deren Urbilder in I, d.h. deren rektifizierte Bildpunktpositionen (x'''',y''''), also etwa 11, 13, 16 in der Sensorebene I berechnet (**Fig. 5d**).

$$\mathbf{H}^{-1} \;=\; \begin{pmatrix} 1 & & \\ & 1 & \\ & & f \end{pmatrix} \cdot \mathbf{U}^T \cdot \begin{pmatrix} 1 & & \\ & 1 & \\ & & 1/f \end{pmatrix}$$

$$=\; \begin{pmatrix} u'_1 & u'_2 & u'_3/f \\ v'_1 & v'_2 & v'_3/f \\ f\,w'_1 & f\,w'_2 & w'_3 \end{pmatrix},$$

Derart werden rektifizierte Punkte (x'''',y'''') = f/(x'''u$_3$' + y'''v$_3$' + f w$_3$') * (x'''u$_1$' + y'''v$_1$' + f w$_1$',x'''u$_2$' +y'''v$_2$' + f w$_2$') erhalten. Aus **Fig. 5d** wird ersichtlich, dass sämtliche, derselben Sensorzeile zuordenbaren Bildpositionen 10, 12, 15 und rektifizierten Bildpunktpositionen 11, 13, 16 auf derselben v-Koordinate liegen und sich lediglich in der u-Koordinate unterscheiden.

Zur Erstellung eines rektifizierten Bildstapels wird anschließend an die oben beschriebene Kalibrierung der Bildaufnahmeeinheit 2, ein Gegenstand 4 mit der Transporteinheit 3 entlang der Transportrichtung t durch den Aufnahmebereich der Bildaufnahmeeinheit 2 bewegt. Wie in **Fig. 1** gezeigt, kann es sich beispielsweise um eine Münze handeln, für die eine dreidimensionale Rekonstruktion anhand von Aufnahmen der Bildaufnahmeeinheit 2 durchgeführt werden soll.

Mit einer ausgewählten Anzahl der Sensorzeilen 21a, 21b, 21c werden während der Bewegung des Gegenstands 4 jeweils Zeilenaufnahmen erstellt und die einzelnen Zeilenaufnahmen separat der einer jeweiligen Sensorzeile 21a, 21b, 21c zugeordneten Zeilentransformation h$_1$, ..., h$_3$ unterzogen. Dabei umfasst ein Bildstapel wie in **Fig. 2** m x n x p Einträge, wobei

- m die Anzahl an durch die u-Koordinate festlegbaren Pixelpositionen pro Sensorzeile 21a, 21b, 21c,
- n die Anzahl der durch die v-Koordinate festgelegten ausgelesenen Sensorzeilen, und

- p die Rahmendauer *(frame duration)* der Aufnahme in Pixel angibt.

Wird nun wie in **Fig. 2** ein Bildstapel aus allen während der Bewegung des Gegenstands 4 aufgenommenen Abbildern des Gegenstands 4 erstellt, wird durch die vorstehend beschriebene Rektifizierung erreicht, dass korrespondierende Bildpunkte im Bildstapel jeweils entlang von Epipolarlinien parallel zur vz-Koordinatenebene im rektifizierten Bildstapel verfolgt werden können. Anders ausgedrückt, haben im rektifizierten Bildstapel korrespondierende Bildpunkte gleiche u-Koordinaten.

Für die erstellten Zeilenaufnahmen wird jeweils eine die ermittelten Helligkeitswerte interpolierende Funktion erstellt. Dazu werden für rektifizierte Bildpunktpositionen 11, 13, 16 in der Sensorebene I Helligkeitswerte beispielsweise durch lineare Kombination der Helligkeitswerte der ursprünglicher Bildpunktpositionen 10, 12, 15 in der Sensorebene I ermittelt. Die Helligkeitswerte der ursprünglichen Bildpunktpositionen 10, 12, 15 in der Sensorebene I werden dabei in demjenigen Verhältnis, in dem die Abstände zwischen den unter Anwendung der Bildtransformation H ermittelten transformierten Bildpunktpositionen 30, 32, 35 in der Bildebene I' entlang einer jeweils betrachteten Zeilenaufnahme stehen, berücksichtigt.

Der einem jeweils betrachteten Gegenstandspunkts $x_i$ in einer erstellten Aufnahme des Gegenstands 4 zugeordneten Helligkeitswert $M(x_i)$ bleibt bei einer Abbildung auf Bildpunktpositionen 10, 12, 15 in der Sensorebene I bzw. einer Überführung mittels der Bildtransformation H in transformierte Bildpunktpositionen 30, 32, 35 in die Bildebene I', gegebenenfalls auch bei Vorliegen einer Kameraverzerrung k, sodass $M(x_i) = M(x'_i) = M(x''_i)$. Der Index i beschreibt dabei die Pixelpositionen in der jeweiligen Sensorzeile 21a, 21b, 21c.

Die Helligkeitswerte $M(x'''_i)$ für die mittels der Neupositionierung R ermittelten bereinigten Bildpunktpositionen 31, 33, 36 in der Bildebene I' bzw. die Helligkeitswerte $M(x''''_i)$ für die unter Anwendung der Inversen der Bildtransformation $H^{-1}$ erhaltenen rektifizierten Bildpunktpositionen 11, 13, 16 in der Sensorebene I werden, entsprechen einander und werden durch folgende Interpolation in der Bildebene I' ermittelt:

$$M(x_i'''') = M(x_i''') = \frac{s}{s+t}M(x_{i-1}) + \frac{t}{s+t}M(x_i)$$

Hierbei wird angenommen, dass $x_i''''$ zwischen $x_{i-1}$ und $x_i$ zu liegen kommt; anderenfalls müssen die nächsten Pixel $x_{k-1}$ und $x_k$ im ursprünglichen Pixelraster genommen werden. Dabei geben s und t jeweils den Abstand der rektifizierten Bildpunktpositionen 11 zu den jeweils benachbarten ursprünglichen Bildpositionen 15, 10 in der Sensorebene I an. Beim Beispiel in **Fig. 5d** gibt s beispielsweise den Abstand zwischen der betrachteten rektifizierten Bildpunktposition 11 und der links davon befindlichen ursprünglichen Bildpunktposition 15 in der Sensorebene I an; t gibt den Abstand zwischen der betrachteten rektifizierten Bildpunktposition 11 und der rechts davon befindlichen ursprünglichen Bildpunktposition 10 in der Sensorebene I an.

Wie oben beschrieben, werden bei der Ermittlung bzw. Interpolation der Helligkeitswerte der rektifizierte Bildpunktpositionen 11, 13, 16 in der Sensorebene I jedoch nur Helligkeitswerte derselben Sensorzeile 21a, 21b, 21c verwendet und es erfolgt keine Interpolation zwischen Helligkeitswerten, die von verschiedenen Sensorzeilen 21a, 21b, 21c aufgenommen wurden. Diese interpolierende Funktion wird dabei an einer Anzahl von Positionen ausgewertet, deren Abbilder unter der Bildtransformation H äquidistant oder nach einer anderen Vorgabe in der Bildebene I' verteilt sind und die Ergebnisse dieser Auswertung werden der rektifizierten Zeilenaufnahme zugeordnet.

Somit ist jedem Gegenstandspunkt mit Weltkoordinaten ein rektifizierter Bildpunkt auf der Sensorebene I eindeutig zugeordnet unter Berücksichtigung, dass die Zeilenausrichtung der Sensorzeilen 21a, 21b, 21c der Bildaufnahmeeinheit 2 in einem Winkel zur Transportrichtung t des Gegenstands 4, auf dem sich der jeweils betrachtete Gegenstandspunkt befindet, ausgerichtet ist. Somit ist sichergestellt, dass in einem derart rektifizierten Bildstapel die Epipolarbedingung erfüllt ist.

Optional kann bei einer der zuvor beschriebenen Ausführungsform eines erfindungsgemäßen Verfahrens zur Aufnahme von Bildern auch ein Referenzgegenstand 1 mit bekannten, in metrischen Einheiten vorgegebenen Abmessungen zur Erstellung der Referenzaufnahmen für die Ermittlung der Brennweite f der Position des Hauptpunktes c und die Ermittlung der Translation und Rotation des Referenzgegenstands 1 in Bezug auf die Bildaufnahmeeinheit 2, sowie zur Ermittlung der Transportrichtung t verwendet werden. Damit ist es möglich, den von den jeweiligen Pixeln jeder der Sensorzeilen 21a, 21b, 21c stammenden Helligkeitswerten metrische Einheiten zuzuordnen.

Dies bietet den Vorteil, dass eine Bildaufnahmeeinheit 2 mit einer Anzahl von Sensorzeilen 21a, 21b, 21c zum Ermitteln von Abmessungen bzw. Distanzen verwendet werden kann bzw. Aussagen über die Genauigkeit der Bildaufnahmeeinheit 2 getroffen werden können.

Optional kann bei einem erfindungsgemäßen Verfahren zur Kalibrierung einer Bildaufnahmeeinheit 2 oder einem erfindungsgemäßen Verfahren zur Aufnahme von Bildern auch eine gegebenenfalls vorhandene Kamera- bzw. Linsenverzerrung berücksichtigt werden. Dabei wird bei der Ermittlung der Brennweite f und der Position des Hauptpunktes c der Bildaufnahmeeinheit 2 auch die Kameraverzerrung k mittels eines bekannten Kalibrierverfahrens für Flächenkameras ermittelt. Gemäß dieser ermittelten Kameraverzerrung wird auf die von der Bildebene I' zurück in die Sensorebene I projizierten Bildpunkte eine Entzerrung vorgenommen.

**Patentansprüche**

1. Verfahren zur Kalibrierung einer Bildaufnahmeeinheit (2), wobei die Bildaufnahmeeinheit (2) über eine Anzahl von Sensorzeilen (21a, 21b, 21c) mit einer Zeilenausrichtung in einem vom rechten Winkel abweichenden Winkel zur Transportrichtung (t) des Referenzgegenstands (1) verfügt, die in Transportrichtung (t) hintereinander, insbesondere parallel zueinander ausgerichtet, angeordnet sind, insbesondere Zeilen eines Flächensensors bilden, wobei

   a) ein Referenzgegenstand (1) mehrfach jeweils mit unterschiedlicher Ausrichtung, insbesondere mit einer Transporteinheit (3), entlang einer Transportrichtung (t) durch den Aufnahmebereich einer Bildaufnahmeeinheit (2) bewegt wird, und von der Bildaufnahmeeinheit (2) für jede der Ausrichtungen des Referenzgegenstands (1) jeweils Referenzaufnahmen erstellt werden, und
   b) aus diesen Referenzaufnahmen die Brennweite (f), die Position des Hauptpunktes (c) der Bildaufnahmeeinheit (2) und die Translation und Rotation des Referenzgegenstands (1) in Bezug auf die Bildaufnahmeeinheit (2) ermittelt werden,
   c) ein Referenzgegenstand (1) entlang der Transportrichtung (t) durch den Aufnahmebereich einer Bildaufnahmeeinheit (2) bewegt und Referenzaufnahmen erstellt werden, oder eine vorgegebene Anzahl der in Schritt a) erstellten Referenzaufnahmen herangezogen wird, die im Rahmen der Bewegung entlang der Transportrichtung (t) durch den Aufnahmebereich einer Bildaufnahmeeinheit (2) erstellt wurden, wobei Bildpunkte aus unterschiedlichen Sensorzeilen (21a, 21b, 21c) in den zeitlich aufeinanderfolgend erstellten Referenzaufnahmen detektiert und einander zugeordnet werden, die Abbilder desselben Gegenstandspunkts des Referenzgegenstands (1) enthalten,
   d) eine statistische Schätzung eines Bewegungsfelds basierend auf der Zuordnung der einzelnen zeitlich aufeinanderfolgend aufgenommenen Bildpunkte erstellt wird, und daraus eine globale Transportrichtung (t) ermittelt wird, die die Bewegungsrichtung des Referenzgegenstands (1) gegenüber der Bildaufnahmeeinheit (2) angibt,
   **dadurch gekennzeichnet, dass**
   e) eine Sensorebene (I) aufgrund der ermittelten Kameraparameter bestimmt wird, wobei

      - die Sensorebene (I) durch den Hauptpunkt (c) verläuft,
      - die Sensorebene (I) normal auf den den Hauptpunkt (c) und das Kamerazentrum (O) verbindenden Hauptsehstrahl (r) ausgerichtet ist,
      - und der Abstand zwischen dem Kamerazentrum (O) der Bildaufnahmeeinheit (2) und dem Hauptpunkt (c) der Brennweite (f) entspricht,

   f) eine neue Bildebene (I') derart ermittelt und festgelegt wird, dass eine der Koordinatenrichtungen (v') der neuen Bildebene (I') parallel zur Transportrichtung (t) ist, derart,

      - dass die Bildebene (I') mit einem minimalen Winkel zur Sensorebene (I) gedreht ist, und/oder
      - dass der Abstand zwischen dem Kamerazentrum (O) und dem Hauptpunkt (c') der Bildebene (I'), der Brennweite (f) entspricht, und

   g) eine Bildtransformation (H), insbesondere eine perspektivische Abbildungsvorschrift, der Sensorebene (I) in die Bildebene (I') des Schritts f) ermittelt wird, die für jeden auf der Sensorebene (I) liegenden Punkt (p) den Schnittpunkt (p') einer durch diesen Punkt (p) und das Kamerazentrum (O) verlaufenden Geraden mit der Bildebene (I') angibt, und
   h) für eine Anzahl von ausgewählten Sensorzeilen (21a, 21b, 21c) jeweils eine Zeilentransformation ($h_1$, ..., $h_3$) erstellt wird, die angibt, wie für jede ursprüngliche Bildpunktposition (10,12,15) in der Sensorebene (I), die einer jeweils betrachteten Zeilenaufnahme einer Sensorzeile (21a, 21b, 21c) der Bildaufnahmeeinheit (2) zugeordnet ist, eine rektifizierte Bildpunktposition (11,13,16) in der Sensorebene (I) ermittelt wird.

2. Verfahren zur Kalibrierung einer Bildaufnahmeeinheit nach Anspruch 1, **dadurch gekennzeichnet, dass** in Schritt h) für jede ursprüngliche Bildpunktposition (10, 12, 15) in der Sensorebene (I), die einer jeweils betrachteten Zeilenaufnahme einer Sensorzeile (21a, 21b, 21c) der Bildaufnahmeeinheit (2) zugeordnet ist, eine rektifizierte Bildpunktposition (11, 13, 16) in der Sensorebene (I) ermittelt wird, indem

- die Bildtransformation (H) auf die ursprünglichen Bildpunktpositionen (10, 12, 15) in der Sensorebene (I) angewandt wird, sodass sie auf transformierte Bildpunktpositionen (30, 32, 35) in der Bildebene (I') abgebildet werden,
- die transformierten Bildpunktpositionen (30, 32, 35) in der Bildebene (I') einer Neupositionierung (R) in Form einer Verschiebung unterzogen werden, wobei die transformierten Bildpunktpositionen (30, 32, 35) in der Bildebene (I') derart auf bereinigte Bildpunktpositionen (31, 33, 36) verschoben werden, dass einander zugeordnete bereinigte Bildpunktpositionen (31a, 31, 31c) verschiedener Sensorzeilen (21a, 21b, 21c) eine gleiche Koordinate (u') aufweisen und
- ausgehend von den bereinigten Bildpunktpositionen (31, 33, 36) in der Bildebene (I') unter Anwendung der Inversen der Bildtransformation (H) rektifizierte Bildpunktpositionen (11, 13, 16) in der Sensorebene (I) berechnet werden.

3. Verfahren zur Aufnahme von Bildern, wobei zunächst das Verfahren zur Kalibrierung einer Bildaufnahmeeinheit nach Anspruch 2 durchgeführt wird und daran anschließend, ein Gegenstand (4) mit der Transporteinheit (3) entlang der Transportrichtung (t) durch den Aufnahmebereich der Bildaufnahmeeinheit (2) bewegt wird und mit einer ausgewählten Anzahl der Sensorzeilen (21a, 21b, 21c) während der Bewegung des Gegenstands (4) jeweils Zeilenaufnahmen erstellt werden und die einzelnen Zeilenaufnahmen separat der der jeweiligen Sensorzeile (21a, 21b, 21c) zugeordneten Zeilentransformation ($h_1$, ..., $h_3$) unterzogen werden.

4. Verfahren zur Aufnahme von Bildern nach Anspruch 3, **dadurch gekennzeichnet, dass** im Rahmen der Zeilentransformation ($h_1$, ..., $h_3$) zur Ermittlung eines Helligkeitswerts für eine jeweils betrachtete, einer Sensorzeile (21a, 21b, 21c) zugeordnete, rektifizierte Bildpunktposition (11, 13, 16) in der Sensorebene (I) die Helligkeitswerte ihrer in der Sensorebene (I) jeweils benachbarten ursprünglichen Bildpunktpositionen (10, 12, 15) interpoliert werden, insbesondere linear in demjenigen Abstandsverhältnis kombiniert werden, das eine jeweils betrachtete rektifizierte Bildpunktposition (11, 13, 16) zu ihren benachbarten ursprünglichen Bildpunktpositionen (10, 12, 15), die derselben Sensorzeile (21a, 21b, 21c) zugeordnet sind, aufweist.

5. Verfahren zur Aufnahme von Bildern nach einem der Ansprüche 3 oder 4, wobei rektifizierte Zeilenaufnahmen erstellt werden, indem für die erstellten Zeilenaufnahmen jeweils eine die ermittelten Helligkeitswerte interpolierende Funktion erstellt wird und diese Funktion an einer Anzahl von Positionen ausgewertet wird, deren Abbilder unter der Bildtransformation (H) äquidistant oder nach einer anderen Vorgabe in der Bildebene (I') verteilt sind, und die Ergebnisse dieser Auswertung der rektifizierten Zeilenaufnahme zugeordnet werden.

6. Verfahren zur Aufnahme von Bildern nach Anspruch 5, **dadurch gekennzeichnet, dass** die interpolierende Funktion an einer Anzahl von rektifizierten Bildpunktpositionen (11, 13, 16) in der Sensorebene (I) ausgewertet wird, wobei für die Ermittlung der rektifizierten Bildpunktpositionen (11, 13, 16) in der Sensorebene (I) bereinigte Bildpunktpositionen (31, 33, 36) mittels einer Neupositionierung (R) von transformierten Bildpunktpositionen (30, 32, 35) in der Bildebene (I') derart ermittelt werden, dass

- einander zugeordnete bereinigte Bildpunktpositionen (31a, 31, 31c) verschiedener Sensorzeilen (21a, 21b, 21c) dieselbe Koordinate (u') aufweisen und
- bereinigte Bildpunktpositionen (31, 33, 36) äquidistant zu ihren jeweils benachbarten bereinigten Bildpunktpositionen (31, 33, 36), die derselben Sensorzeile (21a, 21b, 21c) zugeordnet sind, angeordnet sind, oder nach einer anderen Vorgabe in der Bildebene (I') verteilt sind,

und die rektifizierten Bildpunktpositionen (11, 13, 16) in der Sensorebene (I) unter Anwendung der Inversen der Bildtransformation (H) auf die bereinigten Bildpunktpositionen (21, 33, 36) ermittelt und der rektifizierten Zeilenaufnahme zugeordnet werden.

7. Verfahren zur Aufnahme von Bildern nach einem der Ansprüche 2 oder 3, **dadurch gekennzeichnet, dass** ein Referenzgegenstand (1) mit bekannten in metrischen Einheiten vorgegebenen Abmessungen verwendet wird, und den von den jeweiligen Pixeln jeder der Sensorzeilen (21a, 21b, 21c) stammenden Helligkeitswerten metrische Einheiten zugeordnet werden.

**Claims**

1. Method for calibrating an image recording unit (2), wherein the image recording unit (2) has a number of sensor lines (21a, 21b, 21c) having a line orientation in an angle, deviating from a right angle, to the direction of transport (t) of the reference object (1), which are arranged in direction of transport (t) behind one another, in particular aligned parallel to one another, in particular form lines of a surface sensor, wherein

   a) a reference object (1) is moved multiple times in each case with a different orientation, in particular using a transport unit (3), along a direction of transport (t) through the recording area of an image recording unit (2) and reference images are created respectively by the image recording unit (2) for each of the orientations of the reference object (1), and
   b) from these reference images the focal length (f), the position of the principal point (c) of the image recording unit (2) and the translation and rotation of the reference object (1) in reference to the image recording unit (2) are determined,
   c) a reference object (1) moved along the direction of transport (t) through the recording area of an image recording unit (2) and reference images are created, or a predetermined number of the reference images created in step a) is used, which were created in the context of the movement along the direction of transport (t) through the recording area of an image recording unit (2),
   wherein image points from different sensor lines (21a, 21b, 21c) are detected in the reference images created following chronologically upon one another, and are assigned to one another, which contain depictions of the same object point of the reference object (1),
   d) a statistical estimate of a field of movement is created based on the assignation of the individual image points created following chronologically upon one another, and a global direction of transport (t) is determined therefrom which specifies the direction of movement of the reference object (1) with respect to the image recording unit (2),
   **characterised in that**
   e) a sensor plane (I) is specified on the basis of the determined camera parameters, wherein

   - the sensor plane (I) runs through the principal point (c),
   - the sensor plane (I) is aligned normal on the main viewing beam (r) connecting the principal point (c) and the camera centre (O),
   - and the distance between the camera centre (O) of the image recording unit (2) and the principal point (c) is equal to the focal length (f),

   f) a new image plane (I') is determined and established such that one of the coordinate directions (v') of the new image plane (I') is parallel to the direction of transport (t), such

   - that the image plane (I') is turned at a minimal angle to the sensor plane (I), and/or
   - that the distance between the camera centre (O) and the principal point (c') of the image plane (I') is equal to the focal length (f), and

   g) an image transformation (H), particularly a perspective mapping rule, of the sensor plane (I) into the image plane (I') of step f) is determined, which for each point (p) situated on the sensor plane (I) specifies the intersection (p') of a straight line extending through this point (p) and the camera centre (O) with the image plane (I'), and
   h) for a number of selected sensor lines (21a, 21b, 21c) respectively one line transformation ($h_1$, ..., $h_3$) is created, which specifies how, for each original image point position (10, 12, 15) in the sensor plane (I), which is assigned to a respectively viewed line recording of a sensor line (21a, 21b, 21c) of the image recording unit (2), a rectified image point position (11, 13, 16) in the sensor plane (I) is determined.

2. Method for calibrating an image recording unit according to claim 1, **characterised in that** in step h) for each original image point position (10, 12, 15) in the sensor plane (I), which is assigned to a respectively viewed line recording of the sensor line (21a, 21b, 21c) of the image recording unit (2), a rectified image point position (11, 13, 16) in the sensor plane (I) is determined, **in that**

   - the image transformation (H) is applied to the original image point positions (10, 12, 15) in the sensor plane (I), such that they are depicted onto transformed image point positions (30, 32, 35) in the image plane (I'),
   - the transformed image point positions (30, 32, 35) in the image plane (I') are submitted to a repositioning (R) in the form of a displacement, wherein the transformed image point positions (30, 32, 35) in the image plane (I') are shifted onto adjusted image point positions (31, 33, 36) such that adjusted image point positions (31a, 31, 31c), assigned to one another, of different sensor lines (21a, 21b, 21c) have an identical coordinate (u') and

- starting from the adjusted image point positions (31, 33, 36) in the image plane (I'), rectified image point positions (11, 13, 16) in the sensor plane (I) are calculated by using the inverses of the image transformation (H).

3. Method for recording images, wherein first the method for calibrating an image recording unit is carried out according to claim 2 and subsequently thereto an object (4) is moved using the transport unit (3) along the direction of transport (t) through the recording area of the image recording unit (2) and respective line recordings are created with a selected number of the sensor lines (21a, 21b, 21c) during the movement of the object (4) and the individual line recordings are submitted separately to the line transformation ($h_1$, ..., $h_3$) assigned to the respective sensor line (21a, 21b, 21c).

4. Method for recording images according to claim 3, **characterised in that** in the context of the line transformation ($h_1$, ..., $h_3$) for determining a brightness value for a respectively viewed rectified image point position (11, 13, 16), assigned to a sensor line (21a, 21b, 21c), in the sensor plane (I) the brightness values of their original image point positions (10, 12, 15), respectively adjacent in the sensor plane (I), are interpolated,
in particularly are combined linearly in the distance ratio which a respectively viewed rectified image point position (11, 13, 16) has to its adjacent original image point positions (10, 12, 15), which are assigned to the same sensor line (21a, 21b, 21c).

5. Method for recording images according to any of claims 3 or 4, wherein rectified line recordings are created in that for the created line recordings in each case a function is created which interposes the determined brightness values and this function is evaluated at a number of positions, the depictions of which are distributed equidistantly or in a manner according to another specification in the image plane (I') during the image transformation (H), and the results of this evaluation are assigned to the rectified line recording.

6. Method for recording images according to claim 5, **characterised in that** the interpolating function is evaluated at a number of rectified image point positions (11, 13, 16) in the sensor plane (I),
wherein for the determination of the rectified image point positions (11, 13, 16) in the sensor plane (I) adjusted image point positions (31, 33, 36) are determined by means of a repositioning (R) of transformed image point positions (30, 32, 35) in the image plane (I') such that

- adjusted image point positions (31a, 31, 31c), assigned to one another, of different sensor lines (21a, 21b, 21c) have the same coordinates (u') and
- adjusted image point positions (31, 33, 36) are arranged so as to be equidistant to their respectively adjacent adjusted image point positions (31, 33, 36), which are assigned to the same sensor lines (21a, 21b, 21c), or are distributed according to another rule in the image plane (I'),

and the rectified image point positions (11, 13, 16) in the sensor plane (I) are determined by applying the inverses of the image transformation (H) to the adjusted image point positions (21, 33, 36) and are assigned to the rectified image recording.

7. Method for recording images according to any of claims 2 or 3, **characterised in that** a reference object (1) is used with known dimensions predetermined in metric units, and metric units are assigned to the brightness values originating from the respective pixels of each of the sensor lines (21a, 21b, 21c).

**Revendications**

1. Procédé pour l'étalonnage d'une unité d'enregistrement d'images (2), dans lequel l'unité d'enregistrement d'images (2) dispose d'un nombre de rangées de capteurs (21a, 21b, 21c) avec une étendue de rangée selon un angle s'écartant de l'angle droit par rapport à la direction de transport (t) de l'objet de référence (1), qui sont disposées les unes derrière les autres dans la direction de transport (t), en particulier orientées parallèlement entre elles, en particulier forment des rangées d'un capteur plat,
dans lequel

a) un objet de référence (1) est déplacé plusieurs fois respectivement avec une orientation différente, en particulier avec une unité de transport (3), le long d'une direction de transport (t) à travers la zone d'enregistrement d'une unité d'enregistrement d'images (2), et pour chacune de orientations de l'objet de référence (1) respectivement des enregistrements de référence sont générés par l'unité d'enregistrement d'images (2), et

b) à partir de ces enregistrements de référence la distance focale (f), la position du point principal (c) de l'unité d'enregistrement d'images (2) et la translation et la rotation de l'objet de référence (1) sont déterminées par rapport à l'unité d'enregistrement d'images (2),

c) un objet de référence (1) déplacé le long de la direction de transport (t) à travers la zone d'enregistrement d'une unité d'enregistrement d'images (2) et des enregistrements de référence sont générés, ou un nombre prédéfini des enregistrements de référence générés à l'étape a) est constitué, enregistrements qui ont été générés dans le cadre du mouvement le long de la direction de transport (t) à travers la zone d'enregistrement d'une unité d'enregistrement d'images (2),

dans lequel des points d'image sont détectés dans les enregistrements de référence générés les uns à la suite des autres dans le temps à partir de différentes rangées de capteurs (21a, 21b, 21c) et sont associés les uns aux autres, qui contiennent des représentations du même point d'objet de l'objet de référence (1),

d) une estimation statistique d'un champ de mouvement sur la base de l'association des points d'image individuels enregistrés les uns à la suite des autres dans le temps est générée, et ainsi une direction de transport globale (t) est déterminée, qui indique la direction de mouvement de l'objet de référence (1) par rapport à l'unité d'enregistrement d'images (2),

**caractérisé en ce que**

e) un plan de capteurs (I) est spécifié sur la base des paramètres de caméra déterminés,

dans lequel

- le plan de capteurs (I) s'étend à travers le point principal (c),
- le plan de capteurs (I) est orienté perpendiculairement au rayon visuel principal (r) reliant le point principal (c) et le centre de caméra (O),
- et la distance entre le centre de caméra (O) de l'unité d'enregistrement d'images (2) et le point principal (c) correspond à la distance focale (f),

f) un nouveau plan d'image (I') est déterminé et défini de telle sorte qu'une des directions de coordonnées (v') du nouveau plan d'image (I') est parallèle à la direction de transport (t), de telle sorte

- que le plan d'image (I') est tourné avec un angle minimal par rapport au plan de capteurs (I), et/ou
- que la distance entre le centre de caméra (O) et le point principal (c') du plan d'image (I') correspond à la distance focale (f), et

g) une transformation d'image (H), en particulier une règle d'application en perspective, du plan de capteurs (I) est déterminée dans le plan d'image (I') de l'étape f), qui indique pour chaque point (p) se trouvant sur le plan de capteurs (I) l'intersection (p') d'une droite s'étendant à travers ce point (p) et le centre de caméra (O) avec le plan d'image (I'), et

h) pour un nombre de rangées de capteurs (21a, 21b, 21c) sélectionnées respectivement une transformation de ligne ($h_1$, ..., $h_3$) est générée, qui indique comment pour chaque position de point d'image d'origine (10, 12, 15) dans le plan de capteurs (I) qui est associée à un enregistrement de rangées respectivement considéré d'une rangée de capteurs (21a, 21b, 21c) de l'unité d'enregistrement d'images (2), une position de point d'image rectifiée (11, 13, 16) dans le plan de capteurs (I) est déterminée.

2. Procédé pour l'étalonnage d'une unité d'enregistrement d'images selon la revendication 1, **caractérisé en ce qu'**à l'étape h) pour chaque position de point d'image d'origine (10, 12, 15) dans le plan de capteurs (I) qui est associée à un enregistrement de rangée respectivement considéré d'une rangée de capteurs (21a, 21b, 21c) de l'unité d'enregistrement d'images (2), une position de point d'image rectifiée (11, 13, 16) est déterminée dans le plan de capteurs (I), en

- appliquant la transformation d'image (H) sur les positions de points d'image d'origine (10, 12, 15) dans le plan de capteurs (I), de sorte qu'elles sont représentées sur des positions de points d'image transformées (30, 32, 35) dans le plan d'image (I'),
- les positions de points d'image transformées (30, 32, 35) dans le plan d'image (I') sont soumises à un nouveau positionnement (R) en forme de décalage, dans lequel les positions de points d'image transformées (30, 32, 35) dans le plan d'image (I') sont décalées sur des positions de points d'image corrigées (31, 33, 36) de telle sorte que des positions de points d'image corrigées associées les unes aux autres (31a, 31, 31c) de différentes rangées de capteurs (21a, 21b, 21c) présentent une même coordonnées (u') et

- en partant des positions de points d'image corrigées (31, 33, 36) dans le plan d'image (I') des positions de points d'image rectifiées (11, 13, 16) sont calculées dans le plan de capteurs (I) en utilisant l'inverse de la transformation d'image (H).

**3.** Procédé pour l'enregistrement d'images, dans lequel d'abord le procédé est réalisé pour l'étalonnage d'une unité d'enregistrement d'images selon la revendication 2 puis un objet (4) est déplacé avec l'unité de transport (3) le long de la direction de transport (t) à travers la zone d'enregistrement de l'unité d'enregistrement d'images (2) et avec un nombre choisi des rangées de capteurs (21a, 21b, 21c) pendant le mouvement de l'objet (4) respectivement des enregistrements de rangée sont générés et les enregistrements de rangée individuels sont soumis séparément à la transformation de rangée ($h_1$, ..., $h_3$) associée aux rangées de capteurs respectives (21a, 21b, 21c).

**4.** Procédé pour l'enregistrement d'images selon la revendication 3, **caractérisé en ce que** dans le cadre de la transformation de rangée ($h_1$, ..., $h_3$) pour la détermination d'une valeur de clarté pour une position de point d'image rectifiée (11, 13, 16) respectivement considérée, associée à une rangée de capteurs (21a, 21b, 21c), dans le plan de capteurs (I) les valeurs de clarté de ses positions de points d'image d'origine respectivement voisines (10, 12, 15) dans le plan de capteurs (I) sont interpolées,
sont en particulier combinées de manière linéaire dans la relation de distance qui présente une position de point d'image rectifiée (11, 13, 16) respectivement considérée par rapport à ses positions de points d'image d'origine voisines (10, 12, 15) qui sont associées aux mêmes rangées de capteurs (21a, 21b, 21c).

**5.** Procédé pour l'enregistrement d'images selon l'une quelconque des revendications 3 ou 4, **caractérisé en ce que** des enregistrements de ligne rectifiés sont générés en générant respectivement une fonction interpolant les valeurs de clarté déterminées pour les enregistrements de lignes générés et cette fonction est évaluée sur un nombre de positions dont des représentations sont réparties dans la transformation d'image (H) de manière équidistante ou selon une autre exigence dans le plan d'image (I') et les résultats de cette évaluation sont associés à l'enregistrement de rangée rectifié.

**6.** Procédé pour l'enregistrement d'images selon la revendication 5, **caractérisé en ce que** la fonction d'interpolation est évaluée sur un nombre de positions de points d'image rectifiées (11, 13, 16) dans le plan de capteurs (I), dans lequel pour la détermination des positions de points d'image rectifiées (11, 13, 16) des positions de points d'image rectifiées (31, 33, 36) dans le plan de capteurs (I) sont déterminées au moyen d'un nouveau positionnement (R) de positions de points d'image transformées (30, 32, 35) dans le plan d'image (I') de telle sorte que

- des positions de points d'image rectifiées associées entre elles (31a, 31, 31c) de différentes lignes de capteurs (21a, 21b, 21c) présentent les mêmes coordonnées (u') et
- des positions de points d'image rectifiées (31, 33, 36) sont disposées de manière équidistante par rapport à leurs positions de points d'image rectifiées (31, 33, 36) respectivement voisines qui sont associées aux mêmes rangées de capteurs (21a, 21b, 21c), ou selon une autre exigence dans le plan d'image (I'),

et les positions de points d'image rectifiées (11, 13, 16) sont déterminées dans le plan de capteurs (I) en utilisant l'inverse de la transformation d'image (H) sur les positions de points d'image rectifiées (21, 33, 36) et sont associées à l'enregistrement de rangée rectifié.

**7.** Procédé pour l'enregistrement d'images selon l'une quelconque des revendications 2 ou 3, **caractérisé en ce qu'**un objet de référence (1) est utilisé avec des dimensions prédéfinies connues en unités métriques, et des unités métriques sont associées aux valeurs de clarté provenant des pixels respectifs de chacune des rangées de capteurs (21a, 21b, 21c).

Fig. 1

Fig. 2

Fig. 3

Fig. 4

Fig. 3a

Fig. 3b

# Fig. 5a

# Fig. 5b

# Fig. 5d

# Fig. 5c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DORIS ANTENSTEINER et al.** High-Precision 3D Sensing with Hybrid Light Field & Photometrie Stereo Approach in Multi-Line Scan Framework. *Electronic Imaging,* 2017, vol. 29 (9), ISSN 2470-1173, 52-60

- **ŠTOLC, S., ; HUBER-MÖRK, R. ; HOLLÄNDER, B. ; SOUKUP, D.** Depth and all-in-focus images obtained by multi-line-scan lightfield approach. *Proc. of SPIE-IS&T/Vol,* 2014, vol. 9024, 902407-1